# EUROPÄISCHE PATENTSCHRIFT

(11) **EP 1 619 737 B1**
(45) Veröffentlichungstag und Bekanntmachung des Hinweises auf die Patenterteilung: **11.06.2008**
(21) Anmeldenummer: 05013766.0
(22) Anmeldetag: 25.06.2005
(51) Int. Cl.: H01M 8/04

(54) **System aus Brennstoffzelle, Nachbrenner und Wärmetauscher**
System consisting of fuel cell, afterburner and heat exchanger
Système de pile à combustible, postbrûleur et échangeur de chaleur

(30) Priorität: 09.07.2004 DE 102004033545; 17.11.2004 DE 102004055424
(43) Veröffentlichungstag der Anmeldung: 25.01.2006
(73) Patentinhaber: Bayerische Motoren Werke Aktiengesellschaft, 80809 München (DE); J. Eberspächer GmbH & Co. KG, 73730 Esslingen (DE); Behr GmbH & Co. KG, 70469 Stuttgart (DE)
(72) Erfinder: Lamp, Peter, 86916 Kaufering (DE); Kammerer, Jürgen, 85276 Pfaffenhofen (DE); Kaupert, Andreas, 89073 Ulm (DE); Reiners, Karsten, 70435 Stuttgart (DE); Pfender, Conrad, 74354 Besigheim (DE); Damsohn, Herbert, 73773 Aichwald (DE); Luz, Klaus, 71083 Herrenberg (DE); Brenner, Martin, 75249 Kieselbronn (DE)
(74) Vertreter: Schmidt, Günter H. H.

(56) Entgegenhaltungen:
- WO-A-20/04082057
- DE-A1- 10 310 642
- US-A1- 2003 162 075
- US-A1- 2004 081 874

## Beschreibung

Die Erfindung betrifft ein System aus einer Brennstoffzelle, einem Nachbrenner für deren Abgas, dem als Oxidationsmittel Luft zugeführt wird, sowie einem Wärmetauscher zum Hochheizen des der Brennstoffzelle zugeführten Luftstromes mittels des Abgases des Nachbrenners.

Brennstoffzellen werden derzeit als Ersatz- und Ergänzungssysteme zur Bereitstellung von elektrischer Leistung in Kraftfahrzeugen diskutiert und sind bekanntlich aus Einzelzellen, die jeweils eine Kathode, eine Anode und eine dazwischen liegende Elektrolytschicht aufweisen, welche für Ionen durchlässig, aber für Elektronen undurchlässig ist, aufgebaut. In Brennstoffzellen reagieren Brennstoff (üblicherweise Wasserstoff oder ein Reformat bzw. ein mittels Reformierung aus Kohlenwasserstoffen erzeugtes wasserstoffhaltiges Gemisch) und ein Oxidationsmittel (üblicherweise Luft-Sauerstoff) unter Abgabe von elektrischem Strom miteinander, wobei jedoch eine vollständige Umsetzung der (üblicherweise gasförmigen) Brennstoffe in Strom und Wärme nicht vollständig geleistet werden kann. Um also die Emission von Brennstoffen und anderen schädlichen Bestandteilen über die Abgase von Brennstoffzellen-Systemen zu verhindern oder auf ein Mindestmass zu beschränken, setzt man typischerweise Nachverbrennungssysteme ein.

Insbesondere an Hochtemperatur-Brennstoffzellen (bspw. SOFC = Festoxid-Brennstoffzelle) ist es aus Wirkungsgradgründen erwünscht, dass die Produktströme der Brennstoffzelle aus deren Anode(n) und Kathode(n) gemeinsam in einer Nachverbrennung umgesetzt werden. Deren Abwärme kann vorteilhafterweise in das Brennstoffzellen-System zurückgeführt werden, und zwar im Wärmetausch mit den der Brennstoffzelle zugeführten Edukten. Für den Einsatz in Brennstoffzellen-Systemen werden dabei verschiedene Nachverbrennungssysteme diskutiert. So sind sowohl Verbrennungen mit freier Flamme nach Vermischung der Medienströme als auch sog. Röhrenbrenner und Porenbrenner und Brenner mit katalytischer Unterstützung theoretisch möglich, wobei jedoch darauf zu achten ist, dass eine unkontrollierte Vermischung der Produktströme von Hochtemperatur-Brennstoffzellen zu vermeiden ist, da sich die gasförmigen Brennstoffe beim vorliegenden Temperaturniveau selbst entzünden könnten, was zu unkontrollierter Verbrennung an ungewünschter Stelle im Brennstoffzellen-System und möglicherweise zu einer Beschädigung desselben führen kann.

In der DE 103 10 642 A1 ist ein System aus Brennstoffzelle, Nachbrenner und Wärmetauscher beschrieben, wobei auf einer den Wärmetauscher enthaltenden Einheit eine den Nachbrenner enthaltende Einheit und auf dieser eine die Brennstoffzelle enthaltende Einheit angeordnet ist, so dass diese Einheiten einen Stapel bilden. Diese im Hinblick aus das früheste Prioritätsdatum der vorliegenden Anmeldung nicht vorveröffentlichte Schrift zeigt zwar eine vorteilhafte, kompakte Bauweise, jedoch besitzen die in dieser Schrift gezeigten Varianten für einen Nachbrenner einen langen Ausbrandraum, was insbesondere für eine Anwendung im Automobilbereich wegen der hier vorliegenden anspruchsvollen Bauraum-Anforderungen (d.h. nach möglichst geringem Bauraumbedarf) ungünstig ist. Auch katalytische Brenner bzw. Porenbrenner sind wegen des Erfordernisses von Strukturen wie Keramiken oder metallischen Katalysatorträgern aufgrund ihrer Kostenstruktur ungünstig. Ferner ist für eine Ausführungsvariante in der genannten Schrift ein sog. Brenngasrecycling vorgeschlagen, wobei dieses zurückgeführte Brenngas der Brennstoffzelle als Edukt wieder direkt zugeführt wird.

Hier soll nun ein verbessertes System nach dem Oberbegriff des Anspruchs 1 aufgezeigt werden (= Aufgabe der vorliegenden Erfindung).
Die Lösung dieser Aufgabe ist dadurch gekennzeichnet, dass eine den Wärmetauscher enthaltende Einheit und eine den Nachbrenner enthaltende Einheit und eine die Brennstoffzelle enthaltende Einheit zu einem Stapel übereinander angeordnet sind und dass der Nachbrenner als Flächenbrenner ausgebildet ist und dass die Wärmetauscher-Einheit neben einem ersten Wärmetauscher, in dem ein Wärmeübergang zwischen dem Abgas des Nachbrenners und dem zugeführten Luftstrom erfolgt, einen zweiten Wärmetauscher enthält, in dem ein Wärmeübergang zwischen einem Rezyklat-Abgasstrom, der stromauf des Nachbrenners vom Brennstoffzellen-Abgasstrom abgezweigt und stromab dieses besagten Wärmetauschers vorzugsweise einem Reformer zur Aufbereitung des der Brennstoffzelle zugeführten Brennstoffs zugeführt wird, und dem der Brennstoffzelle zugeführten Luftstrom erfolgt. Vorteilhafte Weiterbildungen sind Inhalt der Unteransprüche.

Zu einem Stapel geeignet übereinander angeordnet bilden die Bauelemente Brennstoffzelle, Nachbrenner und Wärmerauscher ein System, das sich durch größtmögliche Kompaktheit und gleichzeitig ideale Führung der jeweiligen Gasströme auszeichnet, wobei weiterhin ein günstiger Wärmeübergang zwischen den einzelnen Bauelementen stattfinden kann. Ebenfalls im Hinblick auf eine kompakte Bauweise bei kostengünstiger Herstellbarkeit sowie im Hinblick darauf, dass eine Trennung der Brennstoffzellen-Produktströme möglich sein soll, wird als Nachbrenner für gasförmige Kraftstoffe ein sog. Flächenbrenner vorgeschlagen. Bei diesem an sich bekannten und im übrigen in der nicht vorveröffentlichten WO 2004/082057 A ebenfalls für ein Brennstoffzellen-System verwendeten Flächenbrenner-Prinzip werden über separat geführte Kanäle die beiden miteinander reagierenden Medienströme, nämlich das Brennstoffzellen-Abgas und Luft (bzw. Luftsauerstoff) erst in einem Ausbrandraum vermengt und dort - falls erforderlich mittels einer Zündvorrichtung bzw. eines geeigneten Zündelements - gezündet. Ein Rückschlagen der Flamme in nicht erwünschte Bereiche des Brennstoffzellen-Systems kann so auch bei hohen Temperaturen der Gasströme in der Nachverbrennung verhindert werden. Als weiterer Vorteil darf gelten, dass sich durch die Verteilung der Flammfront auf eine große Fläche eine kompakte Bauart in Verbindung mit der dem Abgasstrom des Nachbrenners nachgeschalteten Wärmetauscher-Einheit darstellen lässt. Hierdurch wird eine Verkürzung des Bauraums gegenüber anderen Brenner-Typen möglich.

Neben den aus der der nicht vorveröffentlichten WO 2004/082057 A bekannten Merkmalen wird vorliegend vorgeschlagen, dass die Wärmetauscher-Einheit neben einem ersten Wärmetauscher, in dem ein Wärmeübergang zwischen dem Abgas des Nachbrenners und dem zugeführten Luftstrom erfolgt, einen zweiten Wärmetauscher enthält, in dem ein Wärmeübergang zwischen einem Rezyklat-Abgasstrom, der stromauf des Nachbrenners vom Brennstoffzellen-Abgasstrom abgezweigt und stromab dieses besagten Wärmetauschers vorzugsweise einem Reformer zur Aufbereitung des der Brennstoffzelle zugeführten Brennstoffs zugeführt wird, und dem der Brennstoffzelle zugeführten Luftstrom erfolgt. Dieser zweite Wärmetauscher ist somit vorgesehen, um einen Teil des Brennstoffzellen-Abgasstromes in vorteilhafter, energetisch günstiger Weise nochmals verwenden zu können und hierbei als sog. Rezyklat vorzugsweise einem Reformer zur Aufbereitung des Brennstoffzellen-Kraftstoffs zuzuführen. Diese Rezyklat-Zufuhr sollte mittels einer Förder- oder Verdichtungsvorrichtung erfolgen, die relativ einfach aufgebaut sein kann, wenn die Temperatur des Rezyklats nicht zu hoch ist. Damit diese Voraussetzung erfüllt werden kann, wird also ein Wärmetauscher vorgeschlagen, der - um den Aufbau des gesamten Systems weiterhin möglichst kompakt zu halten - direkt neben dem anderen, ersten Wärmetauscher bzw. in einer gemeinsamen Ebene mit diesem angeordnet ist. Vorteilhaft ist diese vorgeschlagene Anordnung auch insofern, als durch diese beiden Wärmetauscher zur Aufwärmung der der Brennstoffzelle zugeführte Luftstrom unter einfacher, energetisch günstiger Strömungsführung geleitet werden kann. Um dabei einen bestmöglichen Wärmetausch-Wirkungsgrad zu erzielen, wird vorgeschlagen, die beiden Wärmetauscher als Kreuzstrom-Wärmetauscher auszubilden.

Zurückkommend auf den als Flächenbrenner ausgebildeten Nachbrenner kann dessen Gemischbildung sehr homogen gestaltet werden, nachdem durch die Verteilung der jeweiligen Zufuhrlöcher von Brennstoffzellen-Abgas (von der Anode der Brennstoffzelle kommend) und Luft (bevorzugt bzw. unter anderem von der Kathode der Brennstoffzelle kommend) auf einer sog. Brennfläche in Form einer Platte oder eines Lochblechs eine über dieser Brennfläche verteilte Mischung stattfinden kann. Dabei besteht durch das Lochbild dieser Brennfläche bzw. Platte oder dgl. sowie durch Variierung der Lochdurchmesser auf der Platte bzw. in dem Lochblech eine zusätzliche Möglichkeit, die Gemischbildung und den Verbrennungsprozess und die Entstehung von Emissionen zu beeinflussen. Die Verbrennung findet stets im freien Ausbrandraum statt, ohne dass unterstützende Strukturen, die weitere Kosten verursachen würden, benötigt werden.

Stromauf des Flächenbrenners bzw. in Strömungsrichtung des Brennstoffzellenabgases betrachtet stromauf der Lochblechstruktur des Flächenbrenners und somit auf der der Brennstoffzelle zugewandten Seite derselben ist bevorzugt ein sog. Gasverteiler vorgesehen, in dem der Abgasstrom der Brennstoffzelle aufgeteilt wird in einen ersten, nicht dem Nachbrenner sondern als Rezyklat vorzugsweise einem Reformer zugeführten Teilstrom und in einen zweiten Teilstrom, der in eine Vielzahl von Einzelströmen aufgeteilt über die besagte Lochblechstruktur in den Ausbrandraum des Nachbrenners gelangt, wobei in diesem Gasverteiler auch ein Luftstrom (bzw. Luftsauerstoff-Strom) in eine Vielzahl von Einzelströmen aufgeteilt wird, um danach über die Lochblechstruktur als Oxidationsmittel in den Ausbrandraum des Nachbrenners zu gelangen.

In einer weiteren Konfiguration kann im System zumindest ein zusätzlicher Kanal vorgesehen sein, über den kalte (Umgebungs-)Luft entweder dem heißen Brennstoffzellen-Abgas, d.h. der Kathodenabluft, oder (bzw. und) dem Abgasstrom des Nachbrenners zugeführt werden kann, womit sich die Temperatur der Nachverbrennung regeln lässt. Es kann also der dem Nachbrenner als Oxidationsmittel zugeführte Luftstrom mit veränderbarem Mischungsverhältnis aus dem Rest-Luftstrom der Brennstoffzelle und einem Frischluftstrom zusammengesetzt werden; ferner oder alternativ hierzu kann dem Abgas des Flächenbrenners ein Frischluftstrom zuführbar sein.

Bevorzugt sind sowohl die Wärmetauscher als auch der Flächenbrenner und alle Zufuhrkanäle und Abfuhrkanäle in einer gemeinsamen Struktur gehalten, so bspw. in einem gefrästen Gussteil oder in einer Stahlblechkonstruktion, wobei eine geeignete gasdichte Verbindung untereinander durch Hartlötverbindungen und/oder Schweißverbindungen realisiert sein kann. Bevorzugt ist diese genannte Struktur direkt an die Brennstoffzelle gekoppelt und kann als Halter für dieselbe dienen. Die Gesamtanordnung, bestehend aus Brennstoffzelle, Wärmetauschern, Gasverteilung in Kanälen und Nachverbrennung kann im übrigen an einen sog. Reformer oder an eine andere Quelle für gasförmigem Brennstoff für die Brennstoffzelle gekoppelt sein.

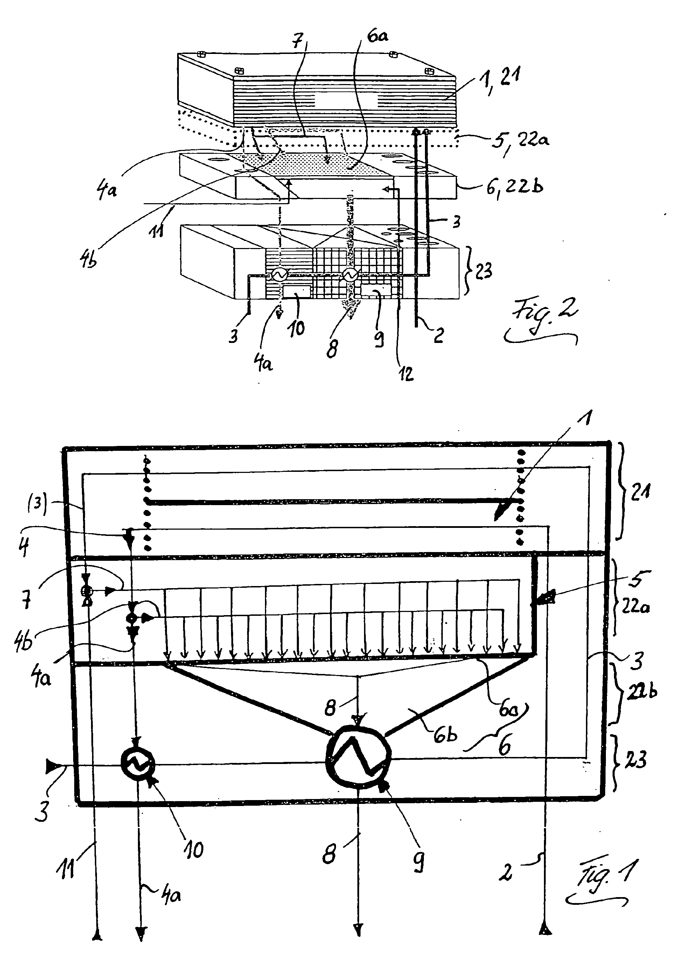

Anhand der als Figur 1 beigefügten Prinzipskizze sowie der räumlichen Quasi-Explosionsdarstellung gemäß Figur 2 wird im weiteren ein bevorzugtes Ausführungsbeispiel der vorliegenden Erfindung erläutert. Mit der Bezugsziffer 1 ist dabei stets ein Brennstoffzellen-Stack (= Stapel von Brennstoff-Einzelzellen bzw. allg. Brennstoffzelle 1) gekennzeichnet, in dem/der wie bekannt bspw. Wasserstoff bzw. ein entsprechendes Reformat als Brennstoff und Luftsauerstoff unter Abgabe elektrischer Energie miteinander reagieren. Der Brennstoffstrom bzw. der Strom von unverbranntem Reformat ist mit der Bezugsziffer 2 gekennzeichnet und der der Brennstoffzelle 1 zugeführte Luftsauerstoffstrom mit der Bezugsziffer 3.

Der Abgasstrom 4 der Brennstoffzelle 1 wird in einem Gasverteiler 5 in einen ersten Teilstrom 4a, der schließlich als sog. Rezyklat vorzugsweise einem nicht dargestellten Reformer zur Erzeugung von Reformat als Brennstoff zugeführt wird, und in einen zweiten Teilstrom 4b aufgeteilt. Dieser Teilstrom 4b wird dann in eine Vielzahl von Einzelströmen aufgeteilt über eine Lochblechstruktur 6a oder dgl. in einen Ausbrandraum 6b eines als sog. Flächenbrenner ausgebildeten Nachbrenners 6 geführt. In diesem Ausbrandraum 6b des Nachbrenners 6 erfolgt also eine Nachverbrennung eines Teils des Brennstoffzellen-Abgasstromes 4, wozu in den Nachbrenner 6 selbstverständlich auch Luftsauerstoff eingeleitet wird, und zwar in Form eines Luftstroms 7 (bzw. Luftsauerstoff-Stroms 7), der ebenfalls im Gasverteiler 5 in eine Vielzahl von Einzelströmen aufgeteilt wird, um danach über die besagte Lochblechstruktur 6a als Oxidationsmittel in den Ausbrandraum 6b zu gelangen.

Der Abgasstrom 8 des Nachbrenners 6 wird (anschließend) durch einen Wärmetauscher 9 hindurch letztlich in die Umgebung abgeführt. In Wärmetausch mit diesem Abgasstrom 8 steht in diesem als Kreuzstrom-Wärmetauscher ausgebildetem Wärmetauscher 9 ein bzw. der der Brennstoffzelle 1 als Frischluftstrom zugeführte Luftsauerstoffstrom 3, welcher hier also zur Verbesserung der Reaktion in der Brennstoffzelle 1 vorteilhafterweise erwärmt wird. Bevor dieser Luftsauerstoffstrom 3 den Wärmetauscher 9 durchströmt, wird er jedoch zunächst durch einen weiteren ebenfalls als Kreuzstrom-Wärmetauscher ausgebildeten Wärmetauscher 10 hindurchgeführt, durch den als zweiter Medienstrom der bereits genannte erste Teilstrom 4a von Brennstoffzellen-Abgas 4 als sog. Rezyklat abgeführt wird. Letzteres wird in diesem Wärmetauscher 10 im Hinblick auf seine weitere Verwendung also vorteilhafterweise abgekühlt.

Was den dem Nachbrenner 6 zugeführten Luftstrom 7 betrifft, so wird für diesen zum einen der Luftsauerstoffstrom 3 der Brennstoffzelle 1 verwendet, wobei auf den in der Brennstoffzelle 1 noch nicht verbrauchten Sauerstoff zugegriffen werden kann; ferner kann diesem Luftstrom 7 ein Frischluftstrom 11 aus der Umgebung beigemengt werden, was hier ebenfalls innerhalb des Gasverteilers 5 erfolgt. Im übrigen kann auch dem Abgas 8 des Nachbrenners Frischluft 12 zugeführt werden (vgl. Fig.2).

Insbesondere aus Figur 2 wird die kompakte Anordnung der soweit beschriebenen System-Bestandteile ersichtlich. Die Brennstoffzelle 1 ist innerhalb eines Gehäuses 21 angeordnet, das mit den zugehörigen Gaskanälen eine sog. Einheit 21 bildet, unterhalb derer im wesentlichen flächengleich innerhalb eines Gehäuses 22 als erste Einheit 22a der Gasverteiler 5 und - in Strömungsrichtung des Brennstoffzellen-Abgasstromes 4 betrachtet dahinter als zweite Einheit 22b der Nachbrenner 6 und an diesen anschließend (bzw. in der Figurendarstellung unterhalb) die Wärmetauscher 9, 10 in einer Einheit 23 angeordnet sind.

## Patentansprüche

1. System aus einer Brennstoffzelle (1), einem Nachbrenner (6) für deren Abgas, dem als Oxidationsmittel Luft zugeführt wird, sowie einem Wärmetauscher (9) zum Hochheizen des der Brennstoffzelle (1) zugeführten Luftstromes (3) mittels des Abgases (8) des Nachbrenners (6),
**dadurch gekennzeichnet, dass** eine den Wärmetauscher (9) enthaltende Einheit (23) und eine den Nachbrenner (6) enthaltende Einheit (22b) und eine die Brennstoffzelle (1) enthaltende Einheit (21) zu einem Stapel übereinander angeordnet sind und dass der Nachbrenner (6) als Flächenbrenner ausgebildet ist,
und dass die Wärmetauscher-Einheit (23) neben einem ersten Wärmetauscher (9), in dem ein Wärmeübergang zwischen dem Abgas (8) des Nachbrenners (6) und dem zugeführten Luftstrom (3) erfolgt, einen zweiten Wärmetauscher (10) enthält, in dem ein Wärmeübergang zwischen einem Rezyklat-Abgasstrom (4a), der stromauf des Nachbrenners (6) vom Brennstoffzellen-Abgasstrom (4) abgezweigt und stromab dieses besagten Wärmetauschers (10) vorzugsweise einem Reformer zur Aufbereitung des der Brennstoffzelle (1) zugeführten Brennstoffs zugeführt wird, und dem der Brennstoffzelle (1) zugeführten Luftstrom (3) erfolgt.

2. System nach Anspruch 1,
**dadurch gekennzeichnet, dass** die beiden Wärmetauscher (9, 10) als Kreuzstrom-Wärmetauscher ausgebildet sind.

3. System nach Anspruch 1 oder 2,
**dadurch gekennzeichnet, dass** die den Flächenbrenner enthaltende Nachbrenner-Einheit einen stromab einer die Brennfläche bildenden Lochblechstruktur vorgesehenen Ausbrandraum aufweist, während stromauf dieser Lochblechstruktur und somit auf der der Brennstoffzelle zugewandten Seite derselben ein Gasverteiler vorgesehen ist, in dem der Abgasstrom der Brennstoffzelle aufgeteilt wird in einen ersten, nicht dem Nachbrenner sondern als Rezyklat einem Reformer zugeführten Teilstrom und in einen zweiten Teilstrom, der in eine Vielzahl von Einzelströmen aufgeteilt über die Lochblechstruktur in den Ausbrandraum des Nachbrenners gelangt, wobei in diesem Gasverteiler auch ein Luftstrom in eine Vielzahl von Einzelströmen aufgeteilt wird, um danach über die Lochblechstruktur als Oxidationsmittel in den Ausbrandraum des Nachbrenners zu gelangen.

4. System nach einem der vorangegangenen Ansprüche,
**dadurch gekennzeichnet, dass** der dem Nachbrenner (6) als Oxidationsmittel zugeführte Luftstrom (7) mit veränderbarem Mischungsverhältnis aus dem Rest-Luftstrom (3) der Brennstoffzelle (1) und einem Frischluftstrom (11) zusammensetzbar ist.

5. System nach einem der vorangegangenen Ansprüche,
**dadurch gekennzeichnet, dass** im Ausbrandraum (6b) des Nachbrenners (6) ein Zündelement vorgesehen ist.

6. System nach einem der vorangegangenen Ansprüche,
**dadurch gekennzeichnet, dass** dem Abgas (8) des Nachbrenners (6) ein Frischluftstrom zuführbar ist.

7. System nach einem der vorangegangenen Ansprüche,
**dadurch gekennzeichnet, dass** die Wärmetauscher (9, 10) und der Nachbrenner (6) sowie die zugehörigen Zu- und Abfuhrkanäle für Gasströme in einer gemeinsamen Struktur oder Einheit (22, 23) gehalten sind und diese direkt an eine Einheit (21) der Brennstoffzelle (1) angekoppelt ist.

## Claims

1. A system comprising a fuel cell (1), an afterburner (6) for its exhaust gas, to which air is supplied as the oxidising agent, as well as a heat exchanger (9) for heating up the airflow (3) supplied to the fuel cell (1) by means of the exhaust gas (8) of the afterburner (6), **characterised in that** a unit (23) containing the heat exchanger (9) and a unit (22b) containing the afterburner (6) and a unit (21) containing the fuel cell (1) are arranged one above the other to form a stack and **in that** the afterburner (6) is configured as a surface burner, and **in that** the heat exchanger unit (23), in addition to a first heat exchanger (9), in which a heat transfer takes place between the exhaust gas (8) of the afterburner (6) and the supplied airflow (3), contains a second heat exchanger (10), in which a heat transfer takes place between a recyclate exhaust gas flow (4a), which branches off from the fuel cell exhaust gas flow (4) upstream from the afterburner (6) and, downstream of said heat exchanger (10), is preferably supplied to a reformer for preparing the fuel supplied to the fuel cell (1), and the airflow (3) supplied to the fuel cell (1).

2. A system according to claim 1, **characterised in that** the two heat exchangers (9, 10) are configured as cross flow heat exchangers.

3. A system according to claim 1 or 2, **characterised in that** the afterburner unit containing the surface burner has a burn-out chamber provided downstream of a perforated plate structure forming the burning face, while, provided upstream of this perforated plate structure and therefore on the side thereof facing the fuel cell is a gas distributor, in which the exhaust gas flow of the fuel cell is divided into a first partial flow not supplied to the afterburner but as a recyclate to a reformer, and a second partial flow, which, divided into a plurality of individual flows, arrives via the perforated plate structure in the burn-out chamber of the afterburner, wherein, in this gas distributor, an airflow is also divided into a plurality of individual flows in order to arrive thereafter via the perforated plate structure as an oxidising means in the burn-out chamber of the afterburner.

4. A system according to any one of the preceding claims, **characterised in that** the airflow (7) supplied to the afterburner (6) as an oxidising means with a variable mixing ratio can be composed of the residual airflow (3) of the fuel cell (1) and a fresh airflow (11).

5. A system according to any one of the preceding claims, **characterised in that** an ignition element is provided in the burn-out chamber (6b) of the afterburner (6).

6. A system according to any one of the preceding claims, **characterised in that** a fresh airflow can be supplied to the exhaust gas (8) of the afterburner (6).

7. A system according to any one of the preceding claims, **characterised in that** the heat exchangers (9, 10) and the afterburner (6) as well as the associated feed and discharge channels for gas flows are held in a common structure or unit (22, 23) and the latter is coupled directly to a unit (21) of the fuel cell (1).

## Revendications

1. Système formé d'une pile à combustible (1), d'un postbrûleur (6) pour ses gaz d'échappement recevant de l'air comme agent oxydant ainsi qu'un échangeur de chaleur (9) pour chauffer la veine d'air (3) fournie à la pile à combustible (1) à l'aide des gaz d'échappement (8) du postbrûleur (6),
**caractérisé en ce qu'**
une unité (23) comportant l'échangeur de chaleur (9) et une unité (22b) comportant le postbrûleur (6) ainsi qu'une unité (21) comportant la pile à combustible (1) sont superposés pour former une pile et le postbrûleur (6) est un brûleur en nappe,
et l'unité d'échangeur de chaleur (23) comporte en plus d'un premier échangeur de chaleur (9) dans lequel se fait l'échange de chaleur entre les gaz d'échappement (8) du postbrûleur (6) et la veine d'air fournit (3), un second échangeur de chaleur (10) dans lequel il y a un échange de chaleur entre une veine de gaz de recyclat (4a) dérivé en amont du postbrûleur (6) de la veine des gaz d'échappement (4) venant de la pile à combustible (1) et en aval de cet échangeur de chaleur (10) de préférence un réformeur pour préparer le carburant destiné à la pile à combustible (1) et ainsi qu'avec la veine d'air (3) fournie à la pile à combustible (1).

2. Système selon la revendication 1,
**caractérisé en ce que**
les deux échangeurs de chaleur (9,10) sont des échangeurs de chaleur à contre-courant.

3. Système selon la revendication 1 ou 2,
**caractérisé en ce que**
l'unité à postbrûleur comportant le brûleur en nappe comporte une chambre de combustion prévue en aval d'une structure à tôle perforée constituant la surface de combustion, alors qu'en amont de cette structure en tôle perforée ainsi du côté tourné vers la pile à combustible, il y a un distributeur de gaz qui répartit la veine de gaz de la pile à combustible en une première veine partielle fournie comme recyclat à un réformeur et non au postbrûleur et une seconde veine partielle divisée en grand nombre de veines séparées arrivant à travers la structure en tôle perforée dans la chambre de combustion du postbrûleur, et dans ce distributeur de gaz une veine d'air a été également répartie en un grand nombre de veines séparées pour ensuite arriver à travers la structure en tôle perforée comme agent d'oxydation dans la chambre de combustion du postbrûleur.

4. Système selon l'une des revendications précédentes
**caractérisé en ce que**
la veine d'air (7) fournie comme agent d'oxydation au postbrûleur (6) est composée selon un rapport de mélange variable à partir de la veine d'air résiduel (3) de la pile à combustible (1) et d'une veine d'air frais (11).

5. Système selon l'une des revendications précédentes
**caractérisé en ce qu'**
un élément d'allumage équipe la chambre de combustion (6b) et du postbrûleur (6).

6. Système selon l'une des revendications précédentes
**caractérisé en ce qu'**
une veine d'air frais alimente les gaz d'échappement (8) du postbrûleur (6).

7. Système selon l'une des revendications précédentes
**caractérisé en ce que**
les échangeurs de chaleur (9,10) et le postbrûleur (6) ainsi que les canaux d'alimentation et d'évacuation correspondant des veines de gaz sont tenus dans une structure ou unité commune (22, 23) et celle-ci est directement couplée à une unité (21) de la pile à combustible (1).
